(19) Europäisches Patentamt / European Patent Office / Office européen des brevets

(11) **EP 3 514 026 B1**

(12) **EUROPEAN PATENT SPECIFICATION**

(45) Date of publication and mention of the grant of the patent:
**05.04.2023 Bulletin 2023/14**

(21) Application number: **17850542.6**

(22) Date of filing: **21.07.2017**

(51) International Patent Classification (IPC):
**B60T 8/17** *(2006.01)*      **B61C 17/12** *(2006.01)*
**B61H 7/00** *(2006.01)*      **H02K 7/18** *(2006.01)*
**H02K 49/02** *(2006.01)*

(52) Cooperative Patent Classification (CPC):
**H02K 49/046; B60B 17/00; B60B 19/006;**
**B60T 1/10; B60T 8/1705; B60T 13/586;**
**B61D 43/00; B61H 9/06; B61H 11/00; F16D 61/00;**
**F16D 65/124; H02P 11/00;** B60Y 2200/30;
H02K 7/1846; H02K 49/02;          (Cont.)

(86) International application number:
**PCT/JP2017/026537**

(87) International publication number:
**WO 2018/051636 (22.03.2018 Gazette 2018/12)**

(54) **TRAIN, AND BRAKE CONTROL DEVICE FOR TRAIN**

ZUG UND BREMSSTEUERUNGSVORRICHTUNG FÜR EINEN ZUG

TRAIN, ET DISPOSITIF DE COMMANDE DE FREIN DE TRAIN

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **16.09.2016   JP 2016182046**

(43) Date of publication of application:
**24.07.2019   Bulletin 2019/30**

(73) Proprietor: **Nabtesco Corporation**
**Tokyo 102-0093 (JP)**

(72) Inventors:
• **FLANKL, Michael**
  **Zurich 8092 (CH)**
• **TUEYSUEZ, Arda**
  **Zurich 8092 (CH)**
• **KOLAR, Johann W.**
  **Zurich 8092 (CH)**
• **TSUKADA, Yusuke**
  **Kobe-shi**
  **Hyogo 651-2271 (JP)**
• **NAKAMURA, Kazuhito**
  **Kobe-shi**
  **Hyogo 651-2271 (JP)**

(74) Representative: **Grünecker Patent- und**
**Rechtsanwälte**
**PartG mbB**
**Leopoldstraße 4**
**80802 München (DE)**

(56) References cited:
**JP-A- 2012 125 088     JP-A- 2014 073 076**

(52) Cooperative Patent Classification (CPC): (Cont.)
H02K 2201/03; H02K 2213/09; Y02T 30/00

**Description**

**TECHNICAL FIELD**

The present invention relates to a train and a brake control device for a train.

**BACKGROUND**

A bicycle dynamo that generates electricity without contact is disclosed in the United States Patent Application Publication No. 2014/0132155. In the bicycle dynamo of the above publication, an outer peripheral surface of annular permanent magnet that rotates about a rotation axis extending in a direction orthogonal to a rotation axis of a bicycle wheel is spaced apart from a side surface of the wheel that is continuous with an outer peripheral surface of the wheel.
The permanent magnet in the U.S. Patent Application Publication No. 2014/0132155 includes a plurality of magnetic poles arranged circumferentially such that adjacent magnetic poles are magnetized in opposite directions. For example, when the wheel rotates with the N pole of the permanent magnet facing the side surface of the wheel, eddy currents are generated in the side surface of the wheel in such a direction as to hinder the change of the magnetic flux from the permanent magnet. A repulsive force and attractive force between the magnetic flux generated by the eddy current and the magnetic flux from the permanent magnet cause the permanent magnet to rotate in the rotation direction of the wheel.
Thus, when a coil is wound around the permanent magnet and the magnetic flux from the permanent magnet is linked with the coil, it is possible to obtain an induced power from the coil.

**SUMMARY**

To apply the bicycle dynamo disclosed in the U.S. Patent Application Publication No. 2014/0132155 to a power generator for a train, the permanent magnet, which has to be positioned at a distance from a wheel, may be mounted to a bogie frame of the train. However, the bogie frame of the train is located at different vertical positions depending on the weight of the body of a freight car or a passenger car placed thereon. The bogie frame also moves vertically due to the vibration caused by traveling of the train. Further, since the contact surface of the train wheel is deformed by friction with the rail, it is necessary to periodically perform maintenance work called wheel turning for scraping the contact surface. The outer diameter size of the wheel is reduced each time the wheel turning is performed, and therefore, the positional relationship between the wheel and the permanent magnet is also changed.
The vertical movement of the bogie frame and the wheel turning operation may alter the positional relationship between the permanent magnet and the wheel, failing to secure desired power generation performance.
Document JP 2014 73076 A relates to a non-contact power generator includes a magnetic module for installing a plurality of magnetic poles so as to be directed in a specific direction that is limited in a range of 0-60 degrees, and a power generation module interlocked with the magnetic module through direct or indirect coupling, or interlocked with the magnetic module by magnetic induction. The magnetic module is attached at an interval so as to correspond with an external rotary member, and the angle between the axis of the magnetic module and the axis of the rotary member is smaller than 30 degrees. The magnetic module is interlocked with the power generation module to generate power while rotating by magnetic induction caused by rotation of the rotary member.
Document JP 2012 125088 A relates to an electromechanical device comprises: a first member having a permanent magnet for generating a first magnetic flux; a second member, which relatively moves with the first member, being disposed opposite to the first magnetic flux section and having an electromagnetic coil for generating a second magnetic flux; a coil back yoke for concentrating the first magnetic flux; a heat radiating plate; and a case for accommodating the permanent magnet and the electromagnetic coil. The coil back yoke is formed with laminated steel sheets laminated in a direction perpendicular to both a direction of the first magnetic flux and the relative movement direction, is disposed at a side opposite to the permanent magnet of the electromagnetic coil, and forms a part of the case. Part of the case other than the coil back yoke section is made of resin, and the heat radiating plate is connected to the coil back yoke.
The present invention is intended to address the above drawback, and one object thereof is to provide a train and a brake control device for a train that secure desired power generation performance in spite of the vertical movement of the bogie frame and the wheel turning operation.
To overcome the above drawbacks, provided is a train according to one aspect of the present invention, comprising: a wheel; a rotator disposed to face the wheel without contact and including a permanent magnet that rotates around a rotation axis by Lorentz force generated according to a rotation direction of the wheel; and a power generating unit for converting kinetic energy produced by rotation of the first rotating body into electric energy.
It is also possible that the rotator is disposed such that a facing area of the rotator and the wheel is constant.
It is also possible that the train further comprises a control unit for controlling an installation position of the rotator such that the facing area of the rotator and the wheel is constant.

It is also possible that the facing area of the rotator and the wheel is smaller than an outer-diameter area of the rotator.

It is also possible that the wheel comprises a pair of wheels connected to an axle with respective inner side surfaces opposed to each other, and at least one of the pair of wheels is provided with the rotator facing the inner side surface thereof.

It is also possible that the train further comprises a bogie frame that rotatably supports the wheel, and the rotator is rotatably installed on the bogie frame.

It is also possible that the rotator is rotatably installed on the bogie frame such that even upon vertical movement of the bogie frame, a facing area of the rotator and the wheel is larger than zero and smaller than an outer-diameter area of the rotator.

It is also possible that the rotator is disposed in a longitudinal direction of the bogie frame from a rotation center of the wheel.

It is also possible that the rotator is disposed within an angular range of $\pm\theta$ from a central direction as indicated by Formula (1) below, where r1 is a radius of the wheel, r2 is a radius of the rotator, and $\Delta$h is a distance by which the rotator moves downward relative to the wheel, the central direction being defined as a longitudinal direction of the bogie frame from a rotation center of the wheel.

$$\theta = \sin^{-1}\left\{\frac{1}{r1}\left(\Delta h + \frac{r2(r1 - r2)}{\Delta h}\right)\right\} \quad \cdots \ (1)$$

According to another embodiment of the present invention, provided is a brake control unit for a train comprising: a rotator disposed to face a wheel without contact and including a permanent magnet that rotates around a rotation axis by Lorentz force generated according to a rotation direction of the wheel; a power generating unit for converting kinetic energy produced by rotation of the rotator into electric energy; a speed sensor for sensing a rotation speed of the wheel; and an antilock brake control unit for performing antilock control in braking the wheel based on a sensing signal from the speed sensor, using the electric energy obtained by the power generating unit as a power source.

According to the present invention, desired power generation performance is secured in spite of the vertical movement of the bogie frame and the wheel turning operation.

## BRIEF DESCRIPTION OF THE DRAWINGS

Fig. 1 is a perspective view showing structure around wheels of a train.
Fig. 2 is a front view of a wheel and a rotator.
Fig. 3 shows an arrangement of magnetic poles and directions of magnetization of a permanent magnet in the rotator.
Fig. 4 illustrates the principle of rotation of the permanent magnet caused by eddy currents generated in a side surface of the wheel.
Fig. 5 shows a positional relationship between the wheel and the rotator.
Fig. 6A shows a positional relationship between the rotator and the wheel in a first comparative example.
Fig. 6B shows a positional relationship between the rotator and the wheel in a second comparative example.
Fig. 7 shows an example in which the wheel has a reduced outer diameter.
Fig. 8A shows the state before the bogie frame moves downward.
Fig. 8B shows the state after the rotator moved relatively downward.
Fig. 9 illustrates a permissible region for disposing the rotator.
Fig. 10 is an enlarged view of a part of Fig. 9.
Fig. 11 is a block diagram schematically showing a brake control device for a train.

## DESCRIPTION OF THE EMBODIMENTS

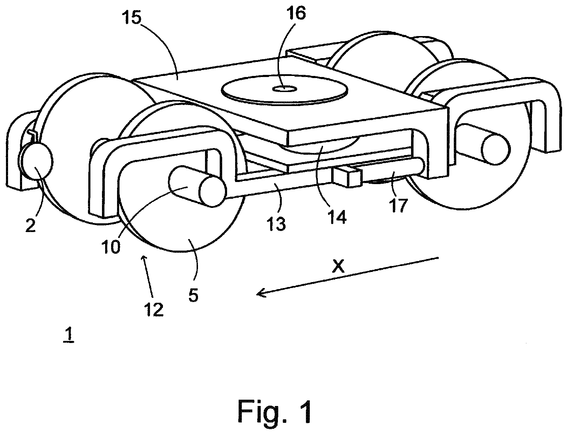

Embodiments of the present invention will be hereinafter described in detail with reference to the drawings. Fig. 1 is a perspective view showing structure around wheels 5 of a train 1. Fig. 1 shows the structure related to characteristic portions of the embodiment in an extractive and simplified manner. As shown in Fig. 1, two wheel sets 12, each including a pair of wheels 5 assembled to an axle 10, are rotatably attached to both ends of the bogie frame 13 in the longitudinal direction. The longitudinal direction X of the bogie frame 13 is the direction of traveling of the train 1.

Fig. 1 shows the structure called an indirect mounting bogie, and the embodiment can also be applied to a direct mounting bogie, a bolsterless bogie, etc. On the top surface of the bogie frame 13 in Fig. 1, there is provided a secondary suspension 14 that supports a bolster 15 placed thereon so as to allow vibration of the bolter 15. A center plate 16 is provided in the middle of the bolster 15. A car body of a freight car or a passenger car (not shown) is placed on the bolster 15, and the car body and the bolster 15 are connected to each other with a center pin (not shown) inserted into the center plate 16. A bolster anchor 17 is provided under the bolster 15. The bolster anchor 17 connects between the bolster 15 and the bogie frame 13.

The pair of wheels 5 in one wheel set 12 have respective inner side surfaces opposed to each other, and at least one of the pair of wheels 5 is provided with a rotator 2 facing the inner side surface thereof without contact. The rotator 2 is supported on the bogie frame 13. The train 1 according to the embodiment includes the rotator 2 facing the wheel 5 without contact and a power generating unit for converting kinetic energy produced by rotation of the rotator 2 into electric energy. The rotator 2 includes a permanent magnet 11 that rotates around a rotation axis by the Lorentz force generated according to the rotation direction of the wheel 5. The rotator 2 may be disposed to face an outer side surface of the wheel 5, instead of facing the inner side surface of the wheel 5. By way of an example, the rotator 2 is hereinafter disposed to face the inner side surface of the wheel 5.

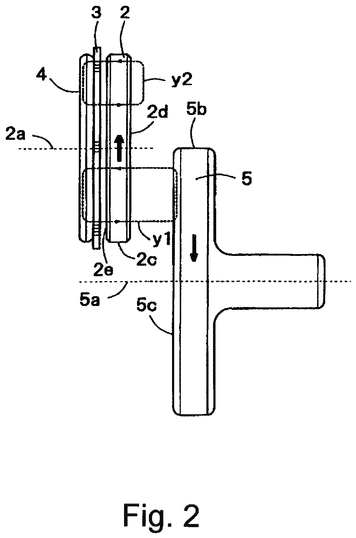

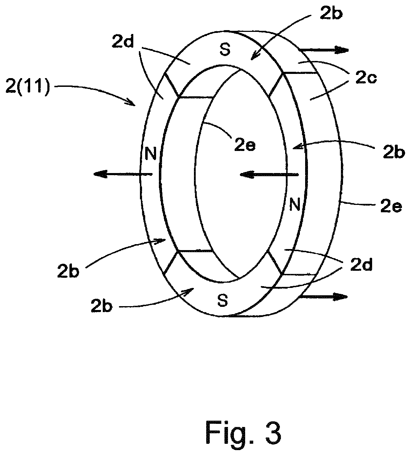

Figs. 2 to 4 illustrate the principle of rotation of the rotator 2 caused by rotation of the wheel 5. Fig. 2 is a front view of the wheel 5 and the rotator 2, and Fig. 3 shows an arrangement of magnetic poles and directions of magnetization of the permanent magnet 11 in the rotator 2.

As shown in Fig. 2, the rotator 2 is disposed at a distance from the wheel 5 and configured to rotate around a rotation axis 2a thereof. The rotator 2 rotates in a direction according to the rotation direction of the wheel 5.

As shown in Fig. 2, the rotation axis 2a of the permanent magnet 11 is parallel with the rotation axis 5a of the wheel 5, and at least a part of a side surface 2d of the permanent magnet 11 that is continuous to an outer peripheral surface 2c thereof faces a side surface 5c of the wheel 5 that is continuous to an outer peripheral surface 5b thereof. More specifically, two or more of the plurality of magnetic poles 2b included in the permanent magnet 11 face the side surface 5c of the wheel 5. Thus, as will be described later, the amount of magnetic coupling between the permanent magnet 11 and the wheel 5 can be increased, and eddy currents generated in the side surface 5c of the wheel 5 can be increased.

Examples of the wheel 5 include a wheel of a vehicle. The wheel 5 generates eddy currents in the side surface 5c thereof facing the permanent magnet 11. To generate the eddy currents, at least the side surface 5c of the wheel 5 needs to be formed of an electrically conductive material such as a metal.

In the embodiment, the eddy currents are generated in the side surface 5c of the wheel 5 by the magnetic flux from the magnetic poles 2b of the permanent magnet 11. Therefore, the distance between the side surface 2d of the permanent magnet 11 and the side surface 5c of the wheel 5 is limited to a range within which the magnetic flux from the magnetic poles 2b of the permanent magnet 11 can reach the wheel 5.

The magnetic poles 2b of the permanent magnet 11 are magnetized in the direction toward the side surface 2d of the permanent magnet 11 or the direction opposite thereto. The adjacent magnetic poles 2b of the permanent magnet 11 are magnetized in opposite directions. In Fig. 3, the directions of magnetization of the magnetic poles 2b of the permanent magnet 11 are indicated by arrows. As shown in Fig. 3, the side surface 2d of the permanent magnet 11 includes N-poles and S-poles alternating circumferentially. In a side surface 2e of the permanent magnet 11 opposite to the side surface 2d facing the wheel 5, the polarities are opposite to those in the side surface 2d.

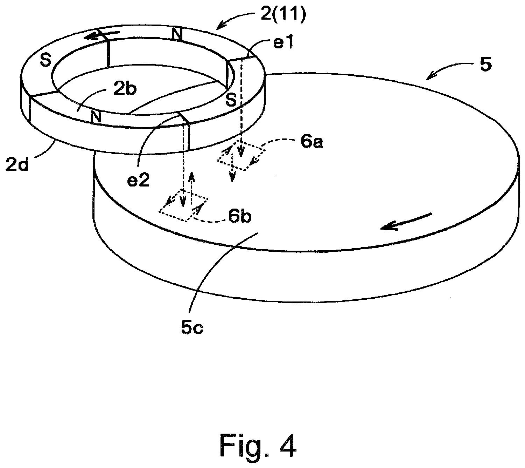

Fig. 4 illustrates the principle of rotation of the permanent magnet 11 caused by eddy currents 6a, 6b generated in the side surface 5c of the wheel 5. Among the plurality of magnetic poles 2b arranged circumferentially in the side surface 2d of the permanent magnet 11, the magnetic poles 2b facing the side surface 5c of the wheel 5 produce magnetic flux that propagates toward the side surface 5c of the wheel 5. The magnetic flux from the magnetic poles 2b of the permanent magnet 11 propagates through an air gap between the side surface 2d of the permanent magnet 11 and the side surface 5c of the wheel 5.

When the wheel 5 rotates, eddy currents are generated in the side surface 5c of the wheel 5 in such a direction as to hinder a change of the magnetic flux from the permanent magnet 11. The permanent magnet 11 is rotated by the interaction (the repulsive force and the attractive force) between the magnetic flux generated by the eddy currents and the magnetic flux from the permanent magnet 11. However, the surface speed of the side surface 2d of the permanent magnet 11 is smaller than the surface speed of the side surface 5c of the wheel 5 opposed thereto.

For example, when an N-pole of the permanent magnet 11 faces the side surface 5c of the wheel 5, the direction of the eddy current 6a generated in the side surface 5c of the wheel 5 at a portion reached by the magnetic flux from an edge e1 of the N-pole at the front in the rotational direction is different from the direction of the eddy current 6b generated in the side surface 5c of the wheel 5 at a portion reached by the magnetic flux from an edge e2 of the N-pole at the rear in the rotational direction. The eddy current 6b generated by the magnetic flux from the edge e2 of the N-pole at the rear in the rotational direction flows in such a direction as to generate magnetic flux in an opposite direction than the magnetic flux from the N-pole. On the other hand, the eddy current 6a generated in the side surface 5c of the wheel 5 at a portion reached by the magnetic flux from the edge e1 of the N-pole at the front in the rotational direction flows in such a direction as to generate magnetic flux in the same direction as the magnetic flux from the N-pole. Both eddy currents 6a, 6b flow in such a direction as to hinder a change of the magnetic flux from the permanent magnet 11 caused by rotation of the wheel 5.

As described above, on the edge e1 side of the N-pole of the permanent magnet 11 at the front in the rotational direction, the direction of the magnetic flux caused by the eddy current 6a is the same as the direction of the magnetic flux from the N-pole of the permanent magnet 11. Therefore, an attractive force acts between these magnetic fluxes. On the other hand, on the edge e2 side of the N-pole of the permanent magnet 11 at the rear in the rotational direction, the direction of the magnetic flux caused by the eddy current 6b is opposite to the direction of the magnetic flux from the N-pole of the permanent magnet 11 . Therefore, a repulsive force acts between these magnetic fluxes. When the surface speed of the side surface 2d of the permanent magnet 11 is smaller than the surface speed of the side surface 5c of the wheel 5 opposed thereto, the above-described relationship between the permanent magnet 11 and the eddy currents 6a, 6b holds true at all time. Thus, the permanent magnet 11 rotates at a surface speed smaller than the surface speed of the side surface 5c of the wheel 5 opposed thereto, so as to run after the moving surface of the side surface 5c of the wheel 5 opposed thereto.

In the example shown in Fig. 2, a coil 3 is opposed to the side surface 2e of the permanent magnet 11 on the opposite side to the side surface 2d opposed to the wheel 5. An air gap is provided between the coil 3 and the side surface 2e of the permanent magnet 11 opposed thereto. The coil 3 is fixed, and the magnetic flux from the permanent magnet 11 rotating is linked with the coil 3. Since the polarities of the plurality of magnetic poles 2b of the permanent magnet 11 arranged circumferentially alternate, the direction of the magnetic flux linked with the coil 3 alternates periodically. Therefore, in the coil 3, an induced current is generated in such a direction as to hinder a change of the magnetic flux from the permanent magnet 11, and the generated induced current can be extracted to obtain an alternating induced power. In this way, the kinetic energy of the wheel 5 can be converted into the electric energy with the coil. Thus, the coil serves as a power generator.

As indicated by the arrows y1, y2 in Fig. 2, the magnetic flux from the permanent magnet 11 is linked with the coil 3 and then propagates through the air to return to the permanent magnet 11. The path passed by the magnetic flux is called a magnetic path. When most part of a magnetic path is occupied by the air, which has a large magnetic resistance, the density of the magnetic flux passing the coil 3 is small, and a resultant induced current is also small. In addition, it is possible that the magnetic flux leaks while propagating through the air or the magnetic path is altered due to an effect of an electrically conductive material in the perimeter. As shown in Fig. 2, it is desirable that a yoke 4 is provided in the magnetic path passed by the magnetic flux linked with the coil 3. The yoke 4 is formed of a material having a high magnetic permeability such as iron. For example, the yoke 4 is tightly attached to the surface of the coil 3 opposite to the surface thereof opposed to the permanent magnet 11 such that the magnetic flux linked with the coil 3 is guided to the yoke 4 without leakage and propagates through the yoke 4 to return to the permanent magnet 11. Thus, the leakage of the magnetic flux can be prevented and the magnetic efficiency can be increased.

As described above, rotation of the wheel 5 causes the eddy currents to be generated in the surface of the wheel 5, and the magnetic flux generated by the eddy currents and the magnetic flux from the permanent magnet 11 produce the attractive force and the repulsive force acting therebetween. These forces constitute a force to rotate the rotator 2 in the same direction as the wheel 5. Therefore, when the wheel 5 starts rotating, the rotator 2 also starts rotating. As the wheel 5 moves or rotates faster, the force to rotate the rotator 2 becomes larger.

When the whole of the primary surface of the rotator 2 opposed to the wheel 5 overlaps the opposed surface of the wheel 5, the Lorentz forces acting on the magnetic poles of the permanent magnet 11 in the rotator 2 cancel each other, and thus the rotator 2 hardly rotates, significantly reducing the power generating performance. Therefore, to stabilize the power generating performance, it is desirable that the facing area in which the rotator 2 and the wheel 5 face each other is smaller than the whole area of the primary surface of the rotator 2, as shown in Fig. 4.

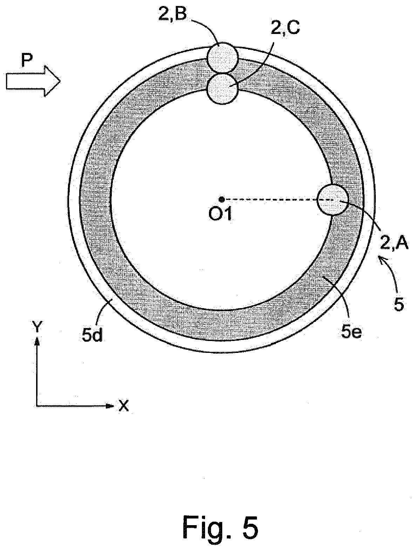

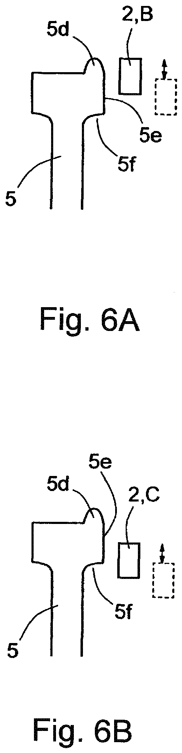

Fig. 5 shows a positional relationship between the wheel 5 and the rotator 2, and Figs. 6A and 6B are plan views from the direction P in Fig. 5. In Fig. 5, the sign A denotes an ideal position of the rotator 2, the sign B denotes the position of the rotator 2 in a first comparative example, and the sign C denotes the position of the rotator 2 in a second comparative example.

Fig. 6A shows a positional relationship between the rotator 2 and the wheel 5 in the first comparative example, and Fig. 6B shows a positional relationship between the rotator 2 and the wheel 5 in the second comparative example. As shown in Figs. 6A and 6B, the wheel 5 of the train 1 includes a flange 5d on a side thereof opposed to the other wheel 5 of the same wheel set 12. The flange 5d reduces the possibility of derailment of the wheel 5. On the inner peripheral side of the flange 5d of the wheel 5, there is provided a generally flat surface (hereinafter referred to as a flat surface) 5e, and on the inner peripheral side of the flat surface 5e, there is provided an edge 5f. The width of the wheel 5 is smaller on the inner peripheral side of the edge 5f. For simplicity, Fig. 2 and other drawings show that the whole of the side surface of the wheel 5 opposed to the rotator 2 is the flat surface 5e. Actually, only a part of the side surface of the wheel 5 opposed to the rotator 2 is the flat surface 5e, as shown in Figs. 6A and 6B.

In the embodiment, the rotator 2 is separated from the flat surface 5e of the wheel 5 by a gap, and the facing area in which the rotator 2 and the flat surface 5e face each other is larger than zero and smaller than the whole area of the primary surface of the rotator 2. That is, less than the whole of the primary surface of the rotator 2 faces the flat surface 5e of the wheel 5. This is because the rotator 2 hardly rotates when the whole of the primary surface of the rotator 2 faces the flat surface 5e of the wheel 5, as described above. The primary surface of the rotator 2 herein refers to the whole of the side surface of the rotator 2 opposed to the wheel 5.

As shown in Figs. 6A and 6B, the wheel 5 includes the flange 5d, the flat surface 5e, and the edge 5f on the side thereof opposed to the other wheel 5 of the same wheel set 12. The rotational energy generated in the rotator 2 depends on the area of the portion in which the gap between the rotator 2 and the wheel 5 is the smallest. The area of the portion in which the gap between the rotator 2 and the wheel 5 is the smallest is defined herein as the facing area of the rotator 2 and the wheel 5. Therefore, the facing area does not include the areas of the portion in which the rotator 2 faces the flange 5d of the wheel 5 and the portion in which the rotator 2 faces the rotation center side of the edge 5f of the wheel 5.

In Fig. 5, the direction X refers to the horizontal direction, or the longitudinal direction of the bogie frame 13, and the direction Y refers to the vertical direction. In the embodiment, as indicated by the position A in Fig. 5, the rotator 2 is positioned in the longitudinal direction X of the bogie frame 13 from the rotation center O1 of the wheel 5, or the position of the axle O1. The reason that the rotator 2 is disposed in the position A of Fig. 5 is as follows. The bogie frame 13 that supports the rotator 2 moves vertically due to the weight of the car body and the vibration caused by traveling. When the rotator 2 is disposed in the position A of Fig. 5, there is no possibility that the whole of the primary surface of the rotator 2 comes out of the flat surface 5e of the wheel 5 even upon vertical vibration of the bogie frame 13.

For example, when the rotator 2 is disposed in the position B or the position C of Fig. 5, it is possible that the whole of the primary surface of the rotator 2 faces the flat surface 5e of the wheel 5 or the whole of the primary surface of the rotator 2 comes out of the flat surface 5e of the wheel 5 upon vertical movement of the bogie frame 13.Figs. 6A and 6B show with a broken line the rotator 2 moved to a different position due to vertical movement of the bogie frame 13.As shown, when the bogie frame 13 is moved vertically by only several tens of millimeters, the whole of the primary surface of the rotator 2 faces the flat surface 5e of the wheel 5, or the whole of the primary surface of the rotator 2 comes out of the flat surface 5e of the wheel 5.When the rotator 2 is in the positions shown with the broken lines in Figs. 6A and 6B, the power generating performance of the rotator 2 is significantly reduced.

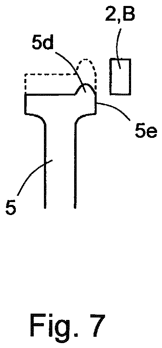

Since the wheel 5 of the train 1 deforms by wear, the wheel 5 needs to be periodically subjected to the wheel turning operation so as to improve the quality of contact between the wheel 5 and the rail. Each time of the wheel turning operation reduces the outer diameter of the wheel 5 including the flange 5d. Fig. 7 shows an example in which the wheel 5 has an outer diameter reduced by wheel turning. When the rotator 2 is positioned on the outer peripheral side of the flat surface 5e of the wheel 5, the positional relationship between the flat surface 5e of the wheel 5 and the rotator 2 is altered by the wheel turning operation on the wheel 5, even taking no account of the vertical movement of the bogie frame 13. Therefore, it is possible that the whole of the primary surface of the rotator 2 comes out of the flat surface 5e of the wheel 5.

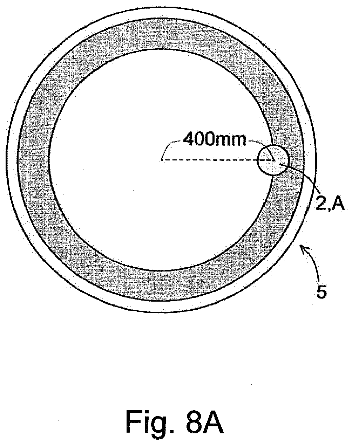

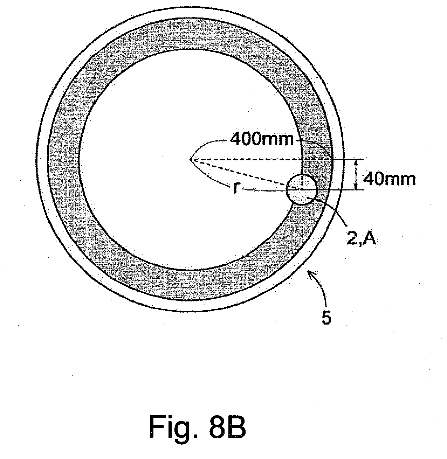

When the rotator 2 is disposed in the position A shown in Fig. 5, the proportion of overlapping of the wheel 5 and the rotator 2 is not altered significantly even upon the vertical movement of the bogie frame 13 or the wheel turning operation on the wheel 5 that reduces the outer diameter of the wheel 5. Fig. 8A shows the state before the bogie frame 13 moves downward. Fig. 8A shows an example in which the rotation center of the rotator 2 resides on the inner peripheral surface of the flat surface 5e of the wheel 5. The distance from the rotation center O1 of the wheel 5 to the rotation center of the rotator 2 is 400 mm, for example. Fig. 8B shows the state after the rotator 2 moved relatively downward by 40 mm, for example. In this state, the distance from the rotation center O1 of the wheel 5 to the rotation center of the rotator 2 is about 402 mm, as expressed by the Formula (2) below, with an increase of only 2 mm as compared to that in Fig. 8A.

$$r = \sqrt{400^2 + 40^2} \cong 402mm \qquad \cdots \ (2)$$

Therefore, when the rotator 2 is disposed in the position A of Fig. 5, it is less possible that the whole of the primary surface of the rotator 2 faces the flat surface 5e of the wheel 5 or the whole of the primary surface of the rotator 2 comes out of the flat surface 5e of the wheel 5 even upon vertical movement of the bogie frame 13, although this depends on the outer diameter of the rotator 2.

Thus, the ideal position of the rotator 2 is the position A in Fig. 5. More accurately, the ideal position of the rotator 2 is in the longitudinal direction X of the bogie frame 13 from the rotation center O1 of the wheel 5, and the facing area in which the primary surface of the rotator 2 and the flat surface 5e of the wheel 5 face each other should be larger than zero and smaller than the outer-diameter area of the primary surface of the rotator 2.

Since the wheel 5 of the train 1 is surrounded by various instruments installed on the train 1, it is presumable that the rotator 2 can not necessarily be disposed in the above ideal position. The rotator 2 may be disposed slightly off the above ideal position as long as practically satisfactory power generating performance is achieved.

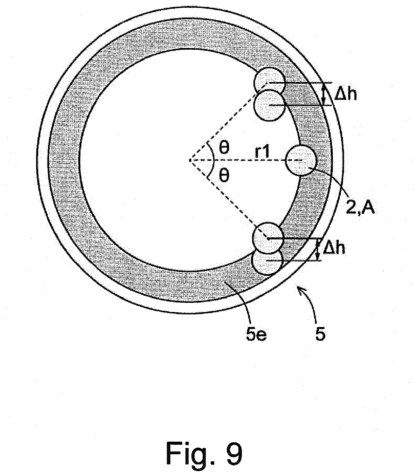

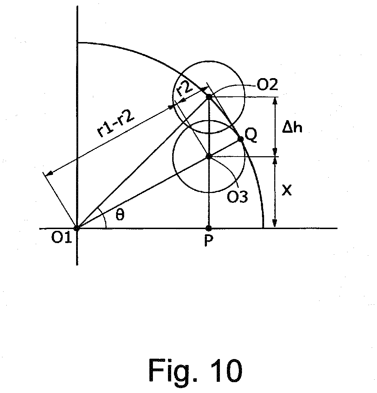

Figs. 9 and 10 illustrate a permissible region for disposing the rotator 2. In Figs. 9 and 10, r1 is the radius of the inner peripheral surface of the flat surface 5e of the wheel 5, r2 is the radius of the primary surface of the rotator 2, and $\Delta h$ is the range of relative downward movement of the rotator 2 due to the vertical movement of the bogie frame 13.

Fig. 9 shows an example in which the rotator 2 is disposed within a range of $\pm\theta$ from a reference direction, which is defined as the longitudinal direction X of the bogie frame 13 from the rotation center O1 of the wheel 5. Fig. 10 is an enlarged view of a part of Fig. 9. In Fig. 10, $\theta$ is a critical angle at which the rotator 2 has moved downward by $\Delta h$ relative to the wheel 5 and the primary surface of the rotator 2 entirely does not face the flat surface 5e of the wheel 5. In Fig. 10, X is the distance between the rotation center of the rotator 2 that has moved downward by $\Delta h$ and the reference direction, O1 is the rotation center of the wheel 5, O2 is the rotation center of the rotator 2 before moving downward by $\Delta h$, O3 is the rotation center of the rotator 2 after moving downward by $\Delta h$, P is the point at which the line passing through the rotation centers O2, O3 intersects the reference direction X, and Q is the point at which the line passing through the rotation center O1 of the wheel 5 and the rotation center O3 of the rotator 2 intersects the inner peripheral surface of the flat surface 5e of the wheel 5.

In Fig. 10, the triangle O2O3Q and the triangle O1O3P are similar. Therefore, the proportional expression of Formula (3) below holds.

$$\Delta h : r2 = r1 - r2 : X \qquad ...(3)$$

Making X the subject of Formula (3) results in Formula (4) below.

$$X = \frac{r2(r1 - r2)}{\Delta h} \qquad \cdots (4)$$

The line segment O2P is expressed by Formula (5) below.

$$O2P = r1 \sin\theta = \Delta h + X \quad ...(5)$$

Substituting Formula (4) for X of Formula (5) and making $\theta$ the subject results in Formula (6) below.

$$\theta = \sin^{-1}\left\{\frac{1}{r1}\left(\Delta h + \frac{r2(r1 - r2)}{\Delta h}\right)\right\} \qquad \cdots (6)$$

Therefore, the permissible region for disposing the rotator 2 is within the angular range of $\pm\theta$ from the reference direction X, and as indicated by Formula (6), $\theta$ is determined by three parameters: the radius r1 of the inner peripheral surface of the flat surface 5e of the wheel 5, the radius r2 of the rotator 2, and the distance $\Delta h$ by which the rotator 2 moves downward relative to the wheel 5.

When the rotator 2 is disposed within the angular range of $\pm\theta$ from the reference direction X, there is no possibility that when the rotator 2 moves downward by $\Delta h$ relative to the wheel 5, the whole of the primary surface of the rotator 2 faces the flat surface 5e of the wheel 5 or the whole of the primary surface of the rotator 2 comes out of the flat surface 5e of the wheel 5. Thus, power generating performance can be secured at a practically acceptable level.

In this way, the embodiment having a non-contact power generator installed on the train 1 is configured such that the rotator 2 opposed to the wheel 5 without contact therewith is disposed in an optimal position. More specifically, the rotator 2 is disposed within the angular range of $\pm\theta$ from the reference direction as indicated by Formula (6), the reference direction being defined as the longitudinal direction X of the bogie frame 13 from the rotation center O1 of the wheel 5. Thus, even upon the vertical movement of the bogie frame 13 that supports the rotator 2, there is no major difference in the facing area of the rotator 2 and the wheel 5, resulting in constantly stable power generating performance.

< Second Embodiment >

In the second embodiment, the antilock brake control is performed using electric energy generated by the non-contact power generator installed on the train 1 as a power source.

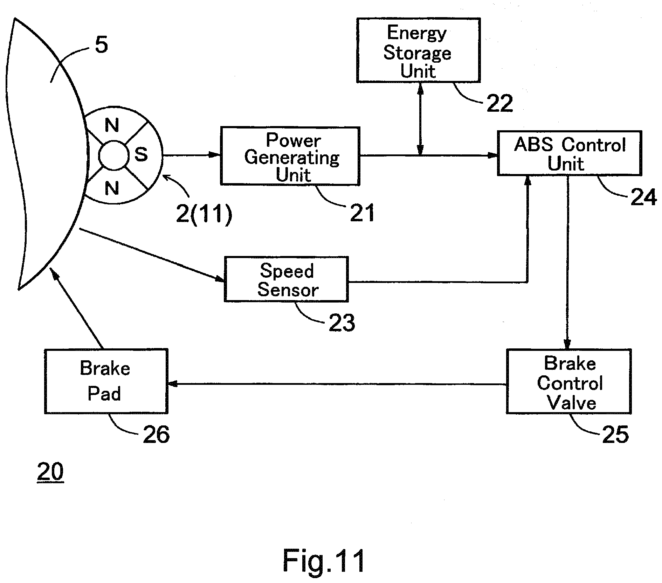

Fig. 11 is a block diagram schematically showing a brake control device 20 for a train. The brake control device 20 for a train includes a rotator 2, a power generating unit 21, an energy storage unit 22, a speed sensor 23, and an ABS (Antilock Brake System) control unit 24.

The rotator 2 and the power generating unit 21 may be the same as those for the first embodiment. The speed sensor 23 senses the rotation speed of the wheel 5.

The power generating unit 21 converts rotational energy of the rotator 2 into electric energy with a coil, and the energy storage unit 22 stores the obtained electric energy.

The ABS control unit 24 performs the antilock control in braking the wheel 5 based on the sensing signals from the speed sensor 23, using the electric energy according to the rotational energy of the rotator 2 as a power source. More specifically, the ABS control unit 24 transmits control signals to a brake control valve 25. The brake control valve 25 is opened or closed in accordance with the control signals, and thereby a brake pad 26 applies a brake to the wheel 5 intermittently.

In conventional brake control devices 20 for a train, it was necessary to run a power cable to secure a power source. By contrast, in the embodiment, the electric energy generated by the power generator can be used mainly for the ABS control, and therefore, running of a long power cable is no longer necessary, resulting in reduced wiring in the train 1 and thus reduced failures such as cable breakage.

As described above, in the second embodiment, the electric energy generated from the rotational energy of the rotator 2 that faces the wheel 5 without contact is used for the ABS control, and therefore, the power source for the ABS control can be readily secured, and running of a long power cable is no longer necessary, resulting in reduced failures such as cable breakage. In addition, since the rotator 2 is disposed in the position described for the first embodiment, stable power generating performance can be achieved in the power source for the ABS control that is critical to vehicles.

## LIST OF REFERENCE NUMBERS

**[0064]**

| | |
|---|---|
| 1 | train |
| 2 | rotator |
| 3 | coil |
| 4 | yoke |
| 5 | wheel |
| 10 | axle |
| 11 | permanent magnet |
| 12 | wheel set |
| 13 | bogie frame |
| 14 | secondary suspension |
| 15 | bolster |
| 16 | center plate |
| 17 | bolster anchor |
| 20 | brake control device for train |
| 21 | power generating unit |
| 22 | energy storage unit |
| 23 | speed sensor |
| 24 | ABS control unit |

**Claims**

1. A train (1) comprising:

    a wheel (5);
    a rotator (2) disposed to face the wheel (5) without contact and including a permanent magnet (11) that rotates around a rotation axis by Lorentz force generated according to a rotation direction of the wheel (5); and
    a power generating unit (21) for converting kinetic energy produced by rotation of the rotator (2) into electric energy.

**EP 3 514 026 B1**

2. The train (1) of claim 1, wherein the rotator is disposed such that a facing area of the rotator and the wheel is constant.

3. The train (1) of claim 2, further comprising a control unit for controlling an installation position of the rotator such that the facing area of the rotator and the wheel is constant.

4. The train (1) of any one of claims 1 to 3, wherein the facing area of the rotator and the wheel is smaller than an outer-diameter area of the rotator.

5. The train (1) of any one of claims 1 to 4, wherein the wheel comprises a pair of wheels connected to an axle with respective inner side surfaces opposed to each other, and at least one of the pair of wheels is provided with the rotator facing the inner side surface thereof.

6. The train (1) of any one of claims 1 to 5, further comprising:
a bogie frame that rotatably supports the wheel, wherein the rotator is rotatably installed on the bogie frame.

7. The train (1) of claim 6, wherein the rotator is rotatably installed on the bogie frame such that even upon vertical movement of the bogie frame, a facing area of the rotator and the wheel is larger than zero and smaller than an outer-diameter area of the rotator.

8. The train (1) of claim 6 or 7, wherein the rotator is disposed in a longitudinal direction of the bogie frame from a rotation center of the wheel.

9. The train (1) of claim 6 or 7, wherein the rotator is disposed within an angular range of ±0 from a central direction as indicated by Formula (1) below, where r1 is a radius of the wheel, r2 is a radius of the rotator, and Δh is a distance by which the rotator moves downward relative to the wheel, the central direction being defined as a longitudinal direction of the bogie frame from a rotation center of the wheel.

$$\theta = \sin^{-1}\left\{\frac{1}{r1}\left(\Delta h + \frac{r2(r1-r2)}{\Delta h}\right)\right\} \quad \cdots (1)$$

10. A brake control device (20) for a train (1), comprising:

a rotator (2) disposed to face a wheel (5) without contact and including a permanent magnet (11) that rotates around a rotation axis by Lorentz force generated according to a rotation direction of the wheel (5);
a power generating unit (21) for converting kinetic energy produced by rotation of the rotator (2) into electric energy;
a speed sensor (23) for sensing a rotation speed of the wheel (5); and
an antilock brake control unit (24) for performing antilock control in braking the wheel based on a sensing signal from the speed sensor (23), using the electric energy obtained by the power generating unit (21) as a power source.

**Patentansprüche**

1. Zug (1), umfassend:

ein Rad (5);
einen Rotator (2), der so angeordnet ist, dass er dem Rad (5) berührungslos gegenübersteht, und der einen Permanentmagneten (11) enthält, der sich um eine Drehachse durch eine Lorentzkraft dreht, die gemäß einer Drehrichtung des Rades (5) erzeugt wird; und
eine Stromerzeugungseinheit (21) zur Umwandlung der durch die Drehung des Rotators (2) erzeugten kinetischen Energie in elektrische Energie.

2. Zug (1) nach Anspruch 1, wobei der Rotator so angeordnet ist, dass eine zugewandte Fläche des Rotators und des Rades konstant ist.

3. Zug (1) nach Anspruch 2, der ferner eine Steuereinheit zur Steuerung einer Einbauposition des Rotators umfasst, so dass die zugewandte Fläche des Rotators und des Rads konstant ist.

4.  Zug (1) nach einem der Ansprüche 1 bis 3, wobei die zugewandte Fläche des Rotators und des Rades kleiner ist als eine Außendurchmesserfläche des Rotators.

5.  Zug (1) nach einem der Ansprüche 1 bis 4, wobei das Rad ein Paar von Rädern umfasst, die mit einer Achse verbunden sind, deren jeweilige Innenseitenflächen einander gegenüberliegen, und wobei wenigstens eines der beiden Rädern derart vorgesehen sind, dass der Rotator der Innenseitenfläche davon zugewandt ist.

6.  Zug (1) nach einem der Ansprüche 1 bis 5, ferner umfassend:
    einen Drehgestellrahmen, der das Rad drehbar hält, wobei der Rotator drehbar an dem Drehgestellrahmen angebracht ist.

7.  Zug (1) nach Anspruch 6, wobei der Rotator derart drehbar auf dem Drehgestellrahmen montiert ist, dass selbst bei vertikaler Bewegung des Drehgestellrahmens eine zugewandte Fläche des Rotators und des Rades größer als Null und kleiner als eine Außendurchmesserfläche des Rotators ist.

8.  Zug (1) nach Anspruch 6 oder 7, wobei der Rotator in einer Längsrichtung des Drehgestellrahmens von einem Drehmittelpunkt des Rades aus angeordnet ist.

9.  Zug (1) nach Anspruch 6 oder 7, wobei der Rotator in einem Winkelbereich von $\pm\theta$ aus einer mittleren Richtung angeordnet ist, wie durch die nachstehende Formel (1) angegeben, wobei r1 ein Radius des Rades ist, r2 ein Radius des Rotators ist und $\Delta$h ein Abstand ist, um den sich der Rotator relativ zum Rad nach unten bewegt, wobei die mittlere Richtung als eine Längsrichtung des Drehgestellrahmens von einem Drehmittelpunkt des Rades aus definiert ist.

$$\theta = \sin^{-1}\left\{\frac{1}{r1}\left(\Delta h + \frac{r2(r1 - r2)}{\Delta h}\right)\right\} \quad \cdots (1)$$

10.  Bremssteuerungsvorrichtung (20) für einen Zug (1), umfassend:

    einen Rotator (2), der so angeordnet ist, dass er einem Rad (5) berührungslos gegenübersteht, und der einen Dauermagneten (11) enthält, der sich durch eine gemäß einer Drehrichtung des Rades (5) erzeugte Lorentzkraft um eine Drehachse dreht;
    eine Stromerzeugungseinheit (21) zur Umwandlung der durch die Rotation des Rotators (2) erzeugten kinetischen Energie in elektrische Energie;
    einen Geschwindigkeitssensor (23) zur Erfassung einer Drehgeschwindigkeit des Rades (5); und
    eine Antiblockier-Bremssteuereinheit (24) zum Durchführen einer Antiblockierungssteuerung beim Abbremsen des Rades auf der Basis eines Erfassungssignals von dem Geschwindigkeitssensor (23), wobei die von der Energieerzeugungseinheit (21) erhaltene elektrische Energie als Energiequelle verwendet wird.

**Revendications**

1.  Train (1) comprenant :

    une roue (5) ;
    un rotateur (2) disposé pour faire face à la roue (5) sans contact et comportant un aimant permanent (11) qui tourne autour d'un axe de rotation par une force de Lorentz générée en fonction d'une direction de rotation de la roue (5) ; et
    une unité de production de puissance (21) pour convertir l'énergie cinétique produite par la rotation du rotateur (2) en énergie électrique.

2.  Train (1) selon la revendication 1, dans lequel le rotateur est disposé de telle sorte qu'une superficie de face à face du rotateur et de la roue est constante.

3.  Train (1) selon la revendication 2, comprenant en outre une unité de commande pour commander une position d'installation du rotateur de telle sorte que la superficie de face à face du rotateur et de la roue est constante.

4. Train (1) selon l'une quelconque des revendications 1 à 3, dans lequel la superficie de face à face du rotateur et de la roue est inférieure à une superficie de diamètre extérieur du rotateur.

5. Train (1) selon l'une quelconque des revendications 1 à 4, dans lequel la roue comprend une paire de roues reliées à un essieu avec des surfaces latérales intérieures respectives opposées l'une à l'autre, et au moins une roue de la paire de roues est dotée du rotateur faisant face à la surface latérale intérieure de celle-ci.

6. Train (1) selon l'une quelconque des revendications 1 à 5, comprenant en outre :
un châssis de bogie qui supporte de manière rotative la roue, dans lequel le rotateur est installé de manière rotative sur le châssis de bogie.

7. Train (1) selon la revendication 6, dans lequel le rotateur est installé de manière rotative sur le châssis de bogie de telle sorte que, même lors d'un déplacement vertical du châssis de bogie, une superficie de face à face du rotateur et de la roue est supérieure à zéro et inférieure à une superficie de diamètre extérieur du rotateur.

8. Train (1) selon la revendication 6 ou 7, dans lequel le rotateur est disposé dans une direction longitudinale du châssis de bogie depuis un centre de rotation de la roue.

9. Train (1) selon la revendication 6 ou 7, dans lequel le rotateur est disposé dans une plage angulaire de $\pm 0$ depuis une direction centrale telle qu'indiquée par la Formule (1) ci-dessous, où r1 est un rayon de la roue, r2 est un rayon du rotateur, et $\Delta$h est une distance de laquelle le rotateur se déplace vers le bas par rapport à la roue, la direction centrale étant définie comme une direction longitudinale du châssis de bogie depuis un centre de rotation de la roue.

$$\theta = \sin^{-1}\left\{\frac{1}{r1}\left(\Delta h + \frac{r2(r1 - r2)}{\Delta h}\right)\right\} \qquad \cdots (1)$$

10. Dispositif de commande de frein (20) pour un train (1), comprenant :

un rotateur (2) disposé pour faire face à une roue (5) sans contact et comportant un aimant permanent (11) qui tourne autour d'un axe de rotation par une force de Lorentz générée en fonction d'une direction de rotation de la roue (5) ;
une unité de production de puissance (21) pour convertir l'énergie cinétique produite par la rotation du rotateur (2) en énergie électrique ;
un capteur de vitesse (23) pour détecter une vitesse de rotation de la roue (5) ; et
une unité de commande de frein antiblocage (24) pour réaliser une commande antiblocage lors du freinage de la roue sur la base d'un signal de détection provenant du capteur de vitesse (23), en utilisant l'énergie électrique obtenue par l'unité de génération de puissance (21) en tant que source de puissance.

Fig. 1

Fig. 2

Fig. 3

Fig. 4

Fig. 5

Fig. 6A

Fig. 6B

Fig. 7

Fig. 8A

Fig. 8B

Fig. 9

Fig. 10

Fig.11

**EP 3 514 026 B1**

**REFERENCES CITED IN THE DESCRIPTION**

**Patent documents cited in the description**

- US 20140132155
- JP 2014073076 A
- JP 2012125088 A